# FASCICULE DE BREVET EUROPEEN

(11) **EP 3 179 532 B1**
(45) Date de publication et mention de la délivrance du brevet: **15.08.2018**
(21) Numéro de dépôt: 16202434.3
(22) Date de dépôt: 06.12.2016
(51) Int. Cl.: H01M 2/06, H01M 2/30, H01M 10/0525, H01M 2/08, C03C 27/02, H01M 4/485, C03C 29/00, C03C 3/097, C03C 8/24, H01M 2/04, C03C 8/08

(54) **TRAVERSÉE ÉTANCHE DE TYPE VERRE-METAL, UTILISATION EN TANT QUE POUR ACCUMULATEUR ÉLECTROCHIMIQUE AU LITHIUM, PROCÉDÉ DE RÉALISATION ASSOCIÉ**
DICHTER QUERTRÄGER VOM TYP GLAS-METALL, SEINE VERWENDUNG FÜR ELEKTROCHEMISCHEN LITHIUMAKKUMULATOR UND ENTSPRECHENDES HERSTELLUNGSVERFAHREN
GLASS-METAL SEALED FEED-THROUGH, USE AS LITHIUM ELECTROCHEMICAL BATTERY, ASSOCIATED PRODUCTION METHOD

(30) Priorité: 07.12.2015 FR 1561919
(43) Date de publication de la demande: 14.06.2017
(73) Titulaire: COMMISSARIAT À L'ÉNERGIE ATOMIQUE ET AUX ÉNERGIES ALTERNATIVES, 75015 Paris (FR)
(72) Inventeur: Revirand, Pascal, 38120 Saint-Égrève (FR); Picard, Lionel, 38170 Seyssinet-Pariset (FR)
(74) Mandataire: Nony

(56) Documents cités:
- WO-A1-2015/155698
- CN-A- 105 121 369
- US-A1- 2013 330 605

## Description

### Domaine technique

La présente invention concerne une traversée étanche de type verre-métal.

Plus particulièrement l'invention a trait à une traversée verre-métal qui forme une borne pour accumulateur électrochimique au lithium, tel qu'un accumulateur lithium-ion.

L'invention vise en premier lieu à améliorer les caractéristiques d'isolation électrique et d'étanchéité vis-à-vis de l'eau tout en assurant une bonne conduction électrique de part et d'autre de la traversée.

Par « traversée », on précise qu'on entend le sens technologique usuel, c'est-à-dire un dispositif servant à faire passer un élément conducteur électrique à travers une paroi et en isolant le conducteur de cette paroi.

Bien que décrite en référence à son application avantageuse de borne d'accumulateur au lithium, l'invention peut être mise en oeuvre dans toute application qui nécessite une traversée étanche.

### Art antérieur

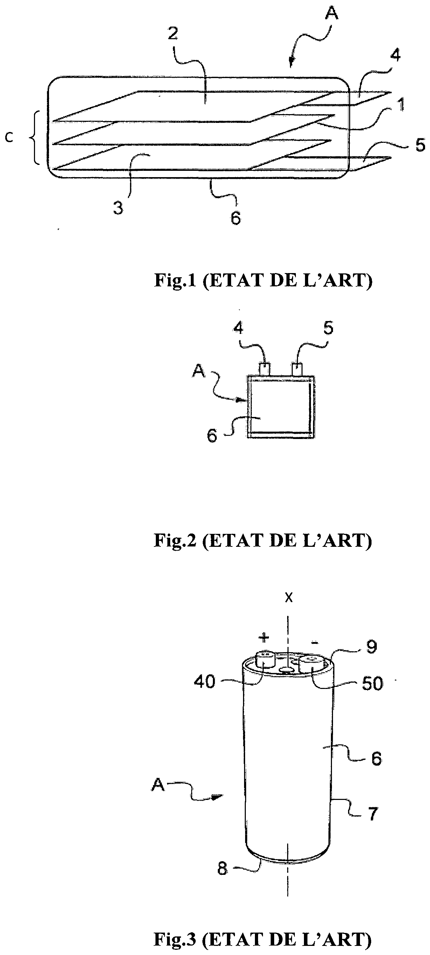

Telle qu'illustrée schématiquement en figures 1 et 2, une batterie ou accumulateur lithium-ion comporte usuellement au moins une cellule électrochimique C constituée d'un constituant d'électrolyte 1 entre une électrode positive ou cathode 2 et une électrode négative ou anode 3, un collecteur de courant 4 connecté à la cathode 2, un collecteur de courant 5 connecté à 1' anode 3 et enfin, un emballage 6 agencé pour contenir la cellule électrochimique avec étanchéité tout en étant traversé par une partie des collecteurs de courant 4, 5.

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :
- une géométrie cylindrique telle que divulguée dans la demande de brevet US 2006/0121348,
- une géométrie prismatique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte 1 peut être de forme solide, liquide ou gel. Sous cette dernière forme, le constituant peut comprendre un séparateur en polymère, en céramique ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF6.

L'électrode positive ou cathode 2 est constituée de matériaux d'insertion du cation Lithium qui sont en général composite, comme LiFePO₄, LiCoO₂, LiNi_{0.33}Mn_{0.33}Co_{0.33}O₂.

L'électrode négative ou anode 3 est très souvent constituée de carbone graphite ou en Li₄TiO₅O₁₂ (matériau titanate), éventuellement également à base de silicium ou de composite formé à base de silicium.

Le collecteur de courant 4 connecté à l'électrode positive est en général en aluminium.

Le collecteur de courant 5 connecté à l'électrode négative est en général en cuivre, en cuivre nickelé ou en aluminium.

Une batterie ou accumulateur lithium-ion peut comporter bien évidemment une pluralité de cellules électrochimiques qui sont empilées les unes sur les autres.

Traditionnellement, une batterie ou accumulateur Li-ion utilise un couple de matériaux à l'anode et à la cathode lui permettant de fonctionner à un niveau de tension élevé, typiquement égal à 3,6 Volt.

Selon le type d'application visée, on cherche à réaliser soit un accumulateur lithium-ion fin et flexible soit un accumulateur rigide : l'emballage est alors soit souple soit rigide et constitue dans ce dernier cas en quelque sorte un boitier.

Les emballages souples sont usuellement fabriqués à partir d'un matériau composite multicouche constitué d'un empilement de couches d'aluminium recouvertes par un ou plusieurs film(s) en polymère laminés par collage.

Les emballages rigides sont quant à eux utilisés lorsque les applications visées sont contraignantes où l'on cherche une longue durée de vie, avec par exemple des pressions à supporter bien supérieures et un niveau d'étanchéité requis plus strict, typiquement inférieure à 10⁻⁸ mbar.l/s, ou dans des milieux à fortes contraintes comme le domaine aéronautique ou spatial.

Aussi, à ce jour un emballage rigide utilisé est constitué d'un boitier métallique, généralement en un métal léger et peu coûteux, typiquement en acier inoxydable (inox 316L ou inox 304) ou en aluminium (Al 1050 ou Al 3003), ou encore en titane. En outre, l'aluminium est généralement préféré pour son coefficient de conductivité thermique élevé comme expliqué ci-après. Des boitiers réalisés en acier recouvert d'un revêtement bimétal en cuivre/nickel ont déjà été envisagés dans la demande de brevet WO 2010/113502.

Des boitiers en matière plastique, en particulier intégralement en polymère ont également déjà été envisagés, en particulier dans la demande de brevet US 2010316094. Bien que présentant une tenue mécanique importante, ces boitiers n'ont que peu de chances d'être viable économiquement en raison du prix de leur matériau constitutif.

Des boitiers en matériau mixte polymère/fibres ont été également envisagés.

On peut citer enfin des boitiers intégrés dans des supports qui permettent aux accumulateurs Li-ion d'être rechargés par un panneau solaire, tel qu'un boitier intégré dans une casquette comme décrit dans la demande de brevet CN 201690389 U.

L'avantage principal des emballages rigides est leur étanchéité élevée et maintenue au cours du temps du fait que la fermeture des boitiers est réalisée par soudure, en générale par soudure au laser. L'inconvénient majeur de ces emballages rigides est leur poids élevé du fait du métal utilisé pour le boitier.

La géométrie de la plupart des boitiers rigides d'emballages d'accumulateurs Li-ion est cylindrique, car la plupart des cellules électrochimiques des accumulateurs sont enroulées par bobinage selon une géométrie cylindrique. Des formes prismatiques de boitiers ont également déjà été réalisées.

Un des types de boitier rigide de forme cylindrique, usuellement fabriqué pour un accumulateur Li-ion de forte capacité et à durée de vie supérieure à 10 ans, est illustré en figure 3.

Le boitier 6 comporte une enveloppe latérale cylindrique 7, un fond 8 à une extrémité, un couvercle 9 à l'autre extrémité, le fond 8 et le couvercle 9 étant assemblés à l'enveloppe 7. Le couvercle 9 supporte les pôles ou bornes de sortie du courant 40, 50. Une des bornes de sortie (pôles), par exemple la borne positive 40 est soudée sur le couvercle 9 tandis que l'autre borne de sortie, par exemple la borne négative 50, passe à travers le couvercle 9 avec interposition d'un joint non représenté qui isole électriquement la borne négative 50 du couvercle.

Quel que soit le type d'emballage souple ou rigide par boitier envisagé à ce jour, la ou les cellules électrochimiques est (sont) de fait contenue(s) dans une enceinte complètement étanche vis-à-vis de l'extérieur.

Or, lorsque l'accumulateur au lithium fonctionne, i.e. la cellule électrochimique est sous tension électrique, il se produit au sein de cette dernière des échauffements. Ceux-ci sont dus de manière minoritaire aux passages des courants vers les connecteurs de courant et principalement aux réactions électrochimiques au sein de chaque cellule.

La dissipation thermique de ces échauffements s'effectue naturellement par les parois externes de la cellule électrochimique, i.e. celles en contact avec l'emballage.

Pour cette raison, les concepteurs d'accumulateurs au lithium, en particulier Li-ion, envisagent systématiquement :
- soit des boitiers d'accumulateurs de forme cylindrique de faible diamètre avec un rapport entre hauteur et de diamètre supérieur à 1 ;
- soit des boitiers d'accumulateurs de forme prismatique avec une plus grande surface de paroi comparativement à ceux de forme cylindrique et toujours avec un rapport entre hauteur et épaisseur supérieur à 1. Des accumulateurs de forme prismatique ont de fait une densité d'énergie supérieure à celle des accumulateurs de forme cylindrique.

Actuellement, deux types de boitier rigide sont fabriqués.

Le premier type consiste également en un boitier rigide constitué avec un godet embouti et un couvercle soudés entre eux sur leur périphérie par laser. En revanche, les collecteurs de courant comprennent une traversée avec une partie faisant saillie sur le dessus du boitier et qui forme une borne aussi appelée pôle apparent de la batterie.

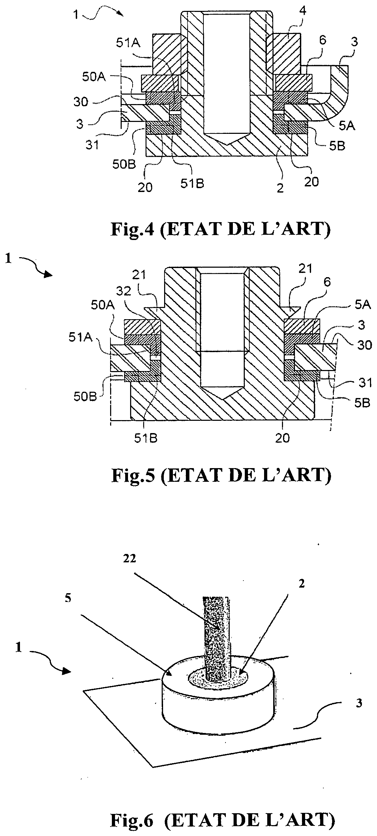

Un premier exemple d'assemblage d'une telle traversée 1 formant borne avec le collecteur de courant 2 et avec le couvercle 3 d'un boitier est montré en figure 4: le collecteur 2, typiquement en cuivre sous la forme d'une pièce mâle filetée intérieurement est fixé par vissage à l'aide d'un écrou 2 de type M5 ou M8. Deux rondelles 5A, 5B en matériau isolant électrique, typiquement en polypropylène, superposées l'une sur l'autre, sont intercalées l'une 5A entre le couvercle 3 et l'autre rondelle 6 d'appui de l'écrou 4 et l'autre 5B entre le couvercle 3 et le collecteur 2. Ces rondelles 5A, 5B réalisent l'étanchéité et l'isolation électrique du collecteur 2 par rapport au couvercle 3 de boitier. Plus précisément, dans ce premier exemple illustré, les deux rondelles isolantes 5A, 5B sont identiques et comportent chacune une portion d'appui 50A, 50B et une portion de guidage et centrage 51A, 51B. La portion d'appui 50A est en appui surfacique avec pression à la fois contre la face 30 de la paroi du couvercle 3 et contre la rondelle d'appui 6 de l'écrou 4. De manière analogue, la portion d'appui 50B est en appui surfacique à la fois contre la face opposée 31 du couvercle 3 et contre la portion d'appui 20 du collecteur de courant 2. Les portions de guidage et centrage 51A, 51B sont, quant à elles, à la fois en appui surfacique avec pression contre le bord de l'orifice traversant 32 du couvercle 2 et contre le collecteur 2. Ces portions de guidage et centrage 51A, 51B permettent de guider et centrer à la fois les rondelles 5A, 5B dans l'orifice traversant 32 et le collecteur mâle 2 dans lesdites rondelles 5A, 5B.

Un deuxième exemple d'assemblage d'une traversée 1 formant borne avec le collecteur de courant 2 et avec le couvercle 3 d'un boitier est montré en figure 5: le collecteur 2, typiquement en cuivre, sous la forme d'une pièce mâle filetée intérieurement est fixé par sertissage du collecteur sur la rondelle d'appui 6. On retrouve ici également les deux rondelles 5A, 5B en matériau isolant électrique, avec leurs portions d'appui 50A, 50B et leurs portions de guidage et de centrage 51A, 51B qui sont agencées à l'identique et réalisent les mêmes fonctions que dans le premier exemple. En revanche, la fixation par sertissage selon ce deuxième exemple se fait sans utilisation de pièce supplémentaire, tel que l'écrou 4 de vissage du premier exemple. En effet, le sertissage est réalisé par écrasement mécanique d'une portion de sertissage 21 disposée sur l'extérieur de la partie cylindrique du collecteur 2, contre la rondelle d'appui 6.

Un troisième exemple d'assemblage d'une traversée formant borne avec le collecteur de courant et avec le couvercle d'un boitier est décrit dans la demande de brevet FR 2798227.

Dans ce premier type de traversées de nombreux matériaux polymère peuvent être mis en oeuvre pour assurer les fonctions d'isolation électrique et d'étanchéité. On pourra se reporter par exemple à la publication [1], notamment aux pages 1 à 168 pour les fonctions d'isolation électrique et aux pages 543 à 571 pour les fonctions d'étanchéité.

Cependant, la perméation vis-à-vis de l'eau des matériaux polymères classiquement utilisés est très nettement supérieure au matériau métallique, en particulier l'aluminium constitutif du boitier d'un accumulateur électrochimique. Cette faiblesse des polymères peut être néfaste pour le comportement et la durée de vie de la ou des cellules électrochimiques de l'accumulateur.

Le deuxième type consiste en un boitier rigide constitué avec un fond usiné et un couvercle soudés entre eux sur leur périphérie par laser. Les collecteurs de courant sont constitués en partie par des fils métalliques ou pions. Le ou les pions est (sont) soudé(s) par soudure électrique ou par ultrasons à la partie du collecteur de courant correspondant connectée elle-même à une des électrodes d'une cellule électrochimique ou d'un empilement de cellules électrochimiques. Pour réaliser l'isolation électrique entre le couvercle métallique du boitier et le pion métallique, une bille de verre enverre le pion en constituant ainsi ce qui est communément appelée une traversée verre-métal (TVM). En outre, pour réaliser l'étanchéité avec le couvercle du boitier, une bague autour de la bille de verre et en général dans le même métal que celui du boitier est soudée à ce dernier. Certaines configurations prévoient d'utiliser une seule TVM, le boitier constituant l'autre borne aussi appelé pôle de l'accumulateur. Ce type de traversées pour différentes batteries est largement décrit dans la littérature. On peut citer par exemple les demandes de brevet/brevets suivants EP1444741A1, US5821011A, US6759163B2, US7687200B2 qui décrivent des TVM spécifiques à des batteries Li-ion.

On a représenté en figure 6 une TVM de batterie Li-ion telle que décrite dans le brevet US7687200B2 : le couvercle 3 du boitier de la batterie est percé d'un orifice non représentée obturé par un joint en verre 5 qui en verre un pion métallique 2 traversant de part en part le couvercle 3 et donc le boitier. Cette traversée TVM permet d'assurer l'isolement des deux bornes de la batterie, l'une en général de polarité positive étant assurée par le boîtier métallique et l'autre en général négative par le pion métallique 2 isolé du couvercle 3 et donc du boitier.

Ces traversées TVM peuvent être mises en oeuvre dans d'autres applications que les batteries Li-ion.

En outre, il est connu d'autres traversées isolantes dans lesquelles le verre peut être remplacé par une céramique, comme par exemple décrit dans la demande de brevet FR2556123.

Le verre a pour avantage d'avoir de meilleures caractéristiques de perméation vis-à-vis de l'eau que les matériaux polymères et une bonne compatibilité thermique avec les métaux qui peuvent constituer un boitier d'accumulateur, en particulier l'aluminium.

Les traversées TVM sont donc comparativement aux traversées du premier type susmentionné à rondelles en polymère des traversées qui permettent de garantir une meilleure isolation électrique et une meilleure étanchéité tout en assurant une bonne conduction électrique d'un côté à l'autre du boitier d'accumulateur.

Le document CN 105 121 639 A divulgue une traversée étanche pour batterie Li-ion comprenant un pion métallique enverré dans un joint en verre ou en verre-céramique, le verre pouvant être une fritte.

Il existe un besoin d'améliorer les traversées verre-métal, notamment en vue de leur application en tant que borne pour accumulateur électrochimique au lithium-ion.

Le but de l'invention est de répondre en partie à ce besoin.

### Exposé de l'invention

Pour ce faire, l'invention concerne un procédé de réalisation d'une traversée réalisée à travers un orifice débouchant de part et d'autre d'une paroi métallique, comportant un ou plusieurs pions à base de métal traversant un joint à base de matériau électriquement isolant fritté obturant l'orifice, le joint à base de matériau isolant fritté étant réalisé par une technique de frittage flash, comprenant les étapes suivantes :
a/ positionnement du corps comprenant la paroi sur le socle d'un outillage, de préférence en graphite;
b/ mise en place de la partie extérieure de l'outillage autour du corps ;
c/ insertion du ou des pions métalliques dans l'orifice débouchant de la paroi puis remplissage du reste de l'orifice par une fritte de verre ;
d/ mise en place de la partie supérieure de l'outillage formant un piston sur une zone intégrant l'orifice rempli de la fritte du matériau électriquement isolant, de préférence une fritte de verre et dans laquelle le ou les pions est(sont) inséré(s);
e/ application d'un cycle de température et de pression, et de déplacement du piston pour mettre en oeuvre un procédé de frittage flash.

De préférence, préalablement à l'étape a/ et/ou l'étape d/, on réalise la mise en place d'une feuille de papier en carbone respectivement entre le socle de l'outillage et le corps et/ou entre le corps et le piston de l'outillage. Chaque feuille de papier carbone permet d'éviter des soudures non désirées entre les différents constituants lors de l'application du cycle de frittage flash. Les passages de courant nécessaires à la mise en oeuvre du procédé flash traversent chaque feuille de papier carbone, afin de séparer la partie verre des pions métalliques, après densification de la fritte de verre.

De préférence encore, préalablement à l'étape a/ et/ou l'étape d/, on réalise la mise en place d'une feuille métallique, de préférence en aluminium, respectivement en contact avec l'extrémité inférieure du ou des pions et/ou avec l'extrémité supérieure du ou des pions. L'accroche de la fritte de verre isolant est réalisée sur chaque feuille métallique.

Une fois la traversée finie, chaque feuille permet de réaliser la fermeture du boitier d'accumulateur par un moyen de soudure adapté, tel que soudure TIG, laser, soudure par faisceau d'électrons.

De préférence, le matériau électriquement isolant est un verre fritté.

De fait, tous les matériaux électriquement isolant pouvant être frittés par un technique de frittage flash peuvent convenir à la réalisation d'une traversée selon l'invention. Il suffit que le matériau isolant présente un point de fusion relativement proche de la température de frittage flash et que cette dernière soit compatible avec les différents autres matériaux, ceux des pions et de la paroi métallique notamment.

Dans l'application principale visée, les inventeurs sont partis d'un couvercle de boitier d'accumulateur en aluminium, et donc, tous les matériaux isolant capable de se mettre en forme à une température inférieure à la température de fusion de l'aluminium conviennent à l'application. En particulier, la fritte de verre convient parfaitement.

Autrement dit, l'invention consiste à appliquer un procédé de frittage flash à une fritte de matériau électriquement isolant, de préférence une fritte de verre, afin qu'elle constitue le joint d'isolation électrique et d'étanchéité d'une traversée.

Le verre fritté selon ce procédé présente une très bonne compatibilité thermique avec l'aluminium qui est le matériau constitutif des boitiers d'accumulateur au lithium.

La traversée obtenue selon l'invention constitue un passage étanche, qui permet grâce au(x) pion(s) métallique(s) une conduction électrique d'un côté à l'autre du passage, et qui présente grâce au joint de verre fritté une isolation électrique et une étanchéité.

Par « procédé de frittage flash », on entend le sens technologique usuel, tel que détaillé dans la publication [2]. Le procédé de frittage flash est couramment désigné en langue anglo-saxonne par l'expression « Spark Plasma Sintering » (SPS), ou encore par l'expression « Field Assisted Sintering Technique » ou encore « Pulsed Electric Current Sintering » (PECS).

Le frittage flash, est un procédé de frittage dérivé du pressage à chaud traditionnel. Par conséquent, les installations de mises en oeuvre d'un frittage flash comprennent elles aussi une enceinte refroidie par eau, un système de presse hydraulique et un contrôle-commande qui contrôle la température, la force de compression et le vide ou l'atmosphère gazeuse à l'intérieur de l'enceinte.

La principale différence par rapport aux presses à chaud traditionnelles réside dans le fait que le frittage flash s'effectue sans résistance chauffante ni isolation thermique traditionnelle de l'enceinte. À la place, le poinçon de la presse est équipé d'une alimentation spéciale en courant fort et d'un refroidissement par eau, pour faire office d'électrode et envoyer directement le courant à travers le moule et la poudre qu'il contient. Cette structure spéciale permet d'obtenir un réchauffement homogène du moule et de la poudre qu'il contient par effet Joule. Ainsi, même à vitesse de chauffage élevée, on obtient des gradients de température relativement faibles, tandis que le frittage traditionnel se heurte à des limites à cause des gradients de température et ne permet d'appliquer que des vitesses de chauffage moyennes, lesquelles entraînent à leur tour des temps de maintien plus longs lors de l'homogénéisation (pourtant souvent incomplète) ultérieure.

Un autre avantage du procédé de frittage flash est que la puissance thermique qui est fournie est non seulement répartie de manière homogène à l'échelle macroscopique sur le volume de poudre à presser, mais également transmise, à l'échelle microscopique, exactement aux points pour lesquels l'énergie est nécessaire au processus de frittage, à savoir les points de contact entre les particules de poudre. De ce fait, le frittage flash est de meilleure qualité avec une faible croissance de grains.

De même, ce procédé élimine largement les processus indésirables de décomposition ou de réaction, ce qui permet d'obtenir une structure de transition jusqu'à présent considérée comme impossible. En fonction du type de poudre (fritte), certains auteurs annoncent d'autres effets positifs aux points de contact, par exemple d'électromigration ou de production de microplasma.

Un joint à base de verre fritté réalisé par un procédé SPS, permet, non seulement d'assurer les différentes fonctions souhaitées (passage de courant, étanchéité) mais permet également, en s'affranchissant de passer la fritte de verre à l'état liquide, d'obtenir des géométries complexes directement aux côtes. De plus, cela permet également d'augmenter la complexité des passages en pouvant réaliser des sorties de plusieurs bornes.

De préférence, une feuille métallique est soudée à au moins une extrémité d'un pion, la feuille soudée constituant une partie d'un collecteur de courant.

Selon une variante avantageuse, le verre fritté est à base d'oxydes alcalins.

Le ou les pions peu(ven)t être avantageusement en aluminium.

Selon un mode de réalisation avantageux, chaque pion forme une borne pour accumulateur électrochimique au lithium, de type Li-ion.

Une batterie ou accumulateur au lithium-ion (Li-ion) comportant un boitier avec un couvercle à travers lequel une traversée décrite précédemment peut être réalisée.

Le couvercle peut être en aluminium, tel que l'aluminium 1050 ou 3003 et le ou les pions est (sont) en aluminium ou en nickel ou en cuivre.

Le matériau d'électrode(s) négative(s) peut être choisi dans le groupe comportant le graphite, le lithium, l'oxyde de titanate Li₄TiO₅O₁₂ ; et le matériau d'électrode(s) positive(s) peut être choisi dans le groupe comportant LiFePO₄, LiCoO₂, LiNi_{0.33}Mn_{0.33}Co_{0.33}O₂.

### Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :
- la figure 1 est une vue schématique en perspective éclatée montrant les différents éléments d'un accumulateur lithium-ion,
- la figure 2 est une vue de face montrant un accumulateur lithium-ion avec son emballage souple selon l'état de l'art,
- la figure 3 est une vue en perspective d'un accumulateur lithium-ion selon l'état de l'art avec son emballage rigide constitué d'un boitier ;
- la figure 4 est une vue en coupe axiale d'une traversée formant borne d'un accumulateur Li-ion selon un exemple de l'état de l'art;
- la figure 5 est une vue en coupe axiale d'une traversée formant borne d'un accumulateur Li-ion selon un autre exemple de l'état de l'art;
- la figure 6 est une vue en perspective d'une traversée de type verre-métal formant borne d'un accumulateur Li-ion selon un autre exemple de l'état de l'art ;
- la figure 7 est une vue en coupe axiale d'une traversée, destinée à former une borne d'un accumulateur Li-ion selon un exemple selon l'invention;
- la figure 8 est une vue en coupe axiale d'un outillage dans laquelle sont logés les différents constituant d'une traversée selon l'invention, l'outillage étant adapté pour mettre un procédé de frittage flash ;
- la figure 9 illustre sous forme de courbes d'évolution de la température et de la pression en fonction du temps, un exemple de cycle de frittage flash appliqué à l'outillage montré en figure 8 afin d'obtenir la traversée selon l'invention ;
- la figure 10 illustre schématiquement un empilement représentatif des éléments d'une traversée selon l'invention sur lequel des essais ont été réalisé;
- les figures 11A à 13B sont des reproductions de vues en coupe obtenues par microscope électronique à balayage (MEB) sous différents grossissement d'un empilement illustré schématiquement en figure 10 ayant subi l'application d'un cycle procédé de frittage flash, à différentes températures.

Les figures 1 à 6 sont relatives à des exemples différents d'accumulateur Li-ion, de boitiers et traversées formant des bornes d'accumulateur Li-ion selon l'état de l'art. Ces figures 1 à 6 ont déjà été commentées en préambule et ne le sont donc pas plus ci-après.

Par souci de clarté, les mêmes références désignant les mêmes éléments de traversées selon l'état de l'art et selon l'invention sont utilisées pour toutes les figures 1 à 6.

Dans l'ensemble de la présente demande, les termes « inférieur », « supérieur », « bas », « haut », « dessous » et « dessus » sont à comprendre par référence par rapport à un boitier d'accumulateur Li-ion positionné à la verticale avec son couvercle sur le dessus et la traversée faisant saillie à l'extérieur du boitier vers le haut.

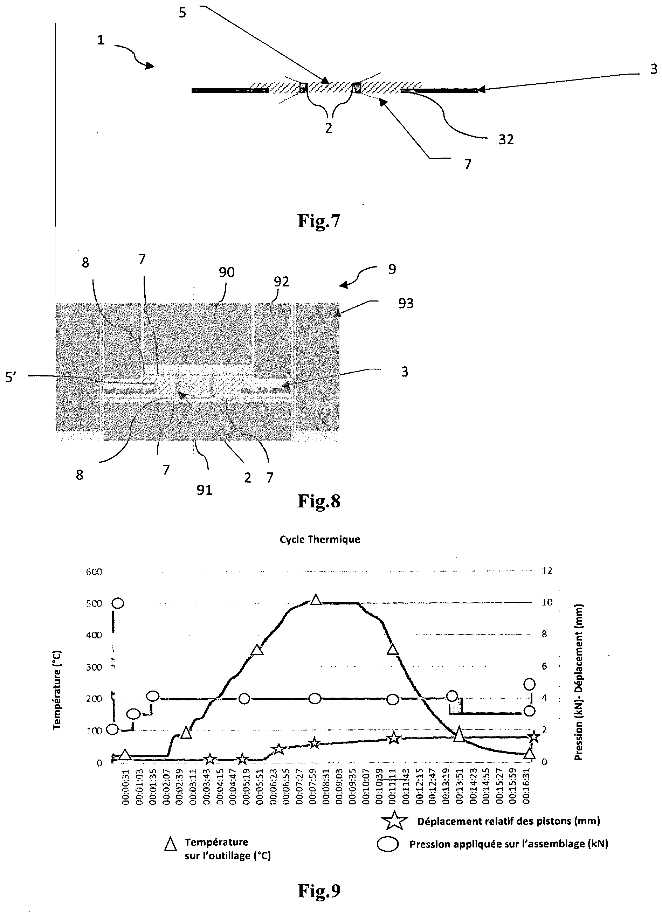

On a représenté en figure 7, un exemple de traversée formant borne 1 d'un accumulateur Li-ion, selon l'invention.

La traversée 1 selon l'invention est réalisée à travers un orifice non débouchant de part et d'autre d'un couvercle 3 d'un boitier d'accumulateur Li-ion.

La traversée 1 représentée comprend deux pions 2,de préférence en aluminium, traversant l'orifice 32 fixés à l'intérieur de celui-ci au moyen d'un joint en fritte de verre isolant 5, obtenu par l'application d'un procédé de frittage flash.

En outre, à chaque extrémité de pion est fixée une feuille métallique 7 qui permet de réaliser la fermeture du boitier d'accumulateur par un moyen de soudure adapté, tel que soudure TIG, laser, soudure par faisceau d'électrons. Plus précisément, la feuille métallique 7 inférieure, c'est-à-dire celle destinée à venir à l'intérieur du boitier d'accumulateur est destinée à être soudée au collecteur de courant de l'un ou l'autre des électrodes de la cellule électrochimique constituant l'accumulateur.

Pour réaliser la traversée 1 selon l'invention, on peut mettre en oeuvre un outillage 9 en graphite tel que montré schématiquement en figure 8. Cet outillage 9 est adapté pour mettre en oeuvre un procédé de frittage flash.

L'outillage 9 comprend une partie supérieure formant un piston de presse 90, une partie inférieure formant un socle 91, le piston 90 étant apte à se déplacer relativement entre des parois périphériques extérieures 92, 93. Les parois périphériques 92 permettent de délimiter un espace à l'intérieur duquel la fritte de verre est confinée, tandis que les parois périphériques 93 les plus à l'extérieur déterminent l'espace de positionnement du couvercle 3.

Le procédé selon l'invention comprend les étapes suivantes :
Etape a/ : on positionne le couvercle 3 sur le socle 91 de l'outillage. Au préalable, on intercale une feuille de carbone 8 entre le socle 91 et le couvercle 3, afin d'éviter toute soudure néfaste dans la suite du procédé. Au préalable également, on insère une feuille métallique en aluminium 7 qui est en contact avec chaque extrémité inférieure de pion 2.
Etape b/: on met en place de la partie extérieure 92, 93 de l'outillage autour du couvercle 3.
Etape c/: on insère en les maintenant les pions métalliques 2 dans l'orifice 32 débouchant de la paroi du couvercle. Puis, on remplit le reste de l'orifice par une fritte de verre 5'.
   A titre d'exemple indicatif, la fritte de verre 5' utilisée, peut être celle commercialisée sous la référence commerciale GL57 par la société Ferro. Les éléments chimiques constituant cette fritte de verre avec leur pourcentage pondéral respectif sont les suivants :
   - oxygène : 43.30%
   - carbone: 7.51 %
   - silicium: 16.01 %
   - aluminium: 0.27%
   - sodium: 12.09%
   - titane: 12.11%
   - phosphore: 1.06%
   - potassium: 7.64%.
Etape d/: on met en place alors le piston 90 de l'outillage sur une zone intégrant l'orifice 32 rempli de la fritte de verre 5' et dans laquelle les pions 2 sont insérés et maintenus. Au préalable, comme pour l'étape a/, on intercale une feuille de carbone 8 entre le couvercle 3 et le piston 90 et on insère une feuille métallique en aluminium 7 qui est en contact avec chaque extrémité supérieure de pion 2.
Etape e/: on applique un cycle de température et de pression et de déplacement du piston 90 pour mettre en oeuvre un procédé de frittage flash.

Un exemple avantageux de cycle en fonction du temps est illustré sous forme de courbes en figure 9.

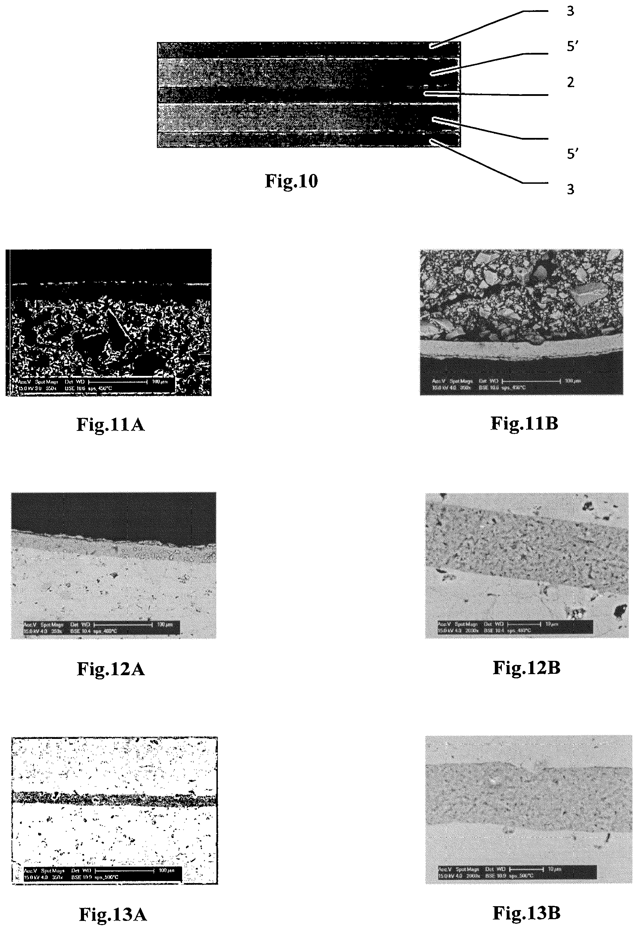

Les inventeurs ont réalisé différents essais d'un empilement alterné de fritte de verre 5' et de pions en aluminium 2 comme montré en figure 10, au moyen de l'outillage 9 et selon différents cycles de frittage flash.

Les figures 11A et 11B montrent en coupe la densification du substrat obtenu à une température de 450°C, respectivement sous un même grossissement de 350 fois mais avec un réglage de contraste différent.

Les figures 12A et 12B montrent en coupe la densification du substrat obtenu à une température de 480°C, respectivement sous un grossissement de 350 fois et de 2000 fois.

Les figures 13A et 13B montrent en coupe la densification du substrat obtenu à une température de 500°C, respectivement sous un grossissement de 350 fois et de 2000 fois.

Il ressort de ces vues au MEB une meilleure densification du verre et une meilleure cohésion/contact entre l'Aluminium et la fritte de verre à 500°C comparativement à 480°C et à 450°C

La traversée 1 selon l'invention peut être réalisée sur un couvercle 3 de boitier d'accumulateur Li-ion aussi bien selon une géométrie cylindrique que selon une géométrie prismatique. Dans ces différentes configurations, la borne 1 selon l'invention est par exemple négative, la borne positive pouvant être réalisée, par exemple directement par soudure, également sur le couvercle 3.

L'invention n'est pas limitée aux exemples qui viennent d'être décrits ; on peut notamment combiner entre elles des caractéristiques des exemples illustrés au sein de variantes non illustrées.

D'autres variantes et améliorations peuvent être envisagées sans pour autant sortir du cadre de l'invention.

Si dans les modes de réalisation illustrés, le matériau du joint est une fritte de verre, tout matériau électrique isolant peut convenir à la condition d'être relativement proche du point de fusion, et que la température du process de frittage flash soit compatible avec les différents autres matériaux, l'aluminium des pions et du couvercle notamment.

Ainsi, pour tout matériau électriquement isolant convenant, il faut veiller à que la température du process de frittage flash oit être légèrement inférieure à la température de fusion.

Dans le mode illustré des figures 7 et 8, la traversée comprend deux pions 2 qui constituent chacun une borne de l'accumulateur. Il est tout-à-fait possible de réaliser un passage étanche qu'avec une seule borne et d'utiliser le boitier de l'accumulateur comme deuxième borne. De manière plus générale, on peut envisager des traversées étanches selon l'invention intégrant un nombre égal à un, deux, trois, quatre....pions conducteurs.

### REFERENCES CITEES

[1]: «Polymers Handbook», FOURTH EDITION. Editors. J. BRANDRUP, E. H. IMMERGUT, and E. A. GRULKE.
[2] : Claude ESTOURNES, «Mise en forme de matériaux par frittage flash», Technique de l'ingénieur ; Référence IN56- 10 juillet 2006

## Revendications

1. Procédé de réalisation d'une traversée (1) comprenant les étapes suivantes :
a/ positionnement d'un corps (3) comprenant une paroi (3) métallique au travers de laquelle débouche un orifice (10) de part et d'autre, sur le socle (91) d'un outillage (9), de préférence en graphite;
b/ mise en place de la partie extérieure (92, 93) de l'outillage autour du corps ;
c/ insertion du ou des pions métalliques (2) dans l'orifice débouchant de la paroi puis remplissage du reste de l'orifice par une fritte (5') en matériau électriquement isolant ;
d/ mise en place de la partie supérieure de l'outillage formant un piston (90) sur une zone intégrant l'orifice rempli de la fritte du matériau électriquement isolant, de préférence une fritte de verre et dans laquelle le ou les pions est (sont) inséré(s) ;
e/ application d'un cycle de température et de pression, et de déplacement du piston pour mettre en oeuvre un procédé de frittage flash.

2. Procédé selon la revendication 1, selon lequel préalablement à l'étape a/ et/ou l'étape d/, on réalise la mise en place d'une feuille de papier en carbone (8) respectivement entre le socle de l'outillage et le corps et/ou entre le corps et le piston de l'outillage.

3. Procédé selon la revendication 1 ou 2, selon lequel préalablement à l'étape a/ et/ou l'étape d/, on réalise la mise en place d'une feuille métallique (7) respectivement en contact avec l'extrémité inférieure du ou des pions et/ou avec l'extrémité supérieure du ou des pions.

4. Procédé selon l'une des revendications précédentes, selon lequel on soude une feuille métallique (7) à au moins une extrémité d'un pion (2), la feuille soudée constituant une partie d'un collecteur de courant.

5. Procédé selon l'une des revendications précédentes, le matériau électriquement isolant fritté du joint (5) étant un verre fritté.

6. Procédé selon la revendication 5, le verre fritté (5) étant à base d'oxydes alcalins.

7. Procédé selon l'une des revendications précédentes, le ou les pions étant en aluminium.

## Patentansprüche

1. Verfahren zur Herstellung eines Querträgers (1), umfassend die folgenden Schritte:
a) Positionieren eines Körpers (3), umfassend eine Metallwand (3), durch die eine Öffnung (10) hindurchgeht, auf dem Sockel (91) eines Werkzeugs (9), vorzugsweise aus Graphit;
b) Anbringen des äußeren Teils (92, 93) des Werkzeugs um den Körper;
c) Einsetzen des oder der Metallstifte (2) in die Durchgangsöffnung der Wand, dann Füllen des Rests der Öffnung mit einer Fritte (5') aus elektrisch isolierendem Material;
d) Anbringen des oberen Teils des Werkzeugs, der einen Kolben (90) bildet, auf einer Zone, die die mit der Fritte des elektrisch isolierenden Materials, vorzugsweise einer Fritte aus Glas, gefüllte Öffnung einschließt, in die der oder die Stift(e) eingesetzt wird(werden);
e) Anlegen eines Temperatur- und Druck- und Verschiebezyklus des Kolbens, um ein Spark-Plasma-Verfahren einzusetzen.

2. Verfahren nach Anspruch 1, bei dem vor dem Schritt a) und/oder dem Schritt d) das Anbringen einer Kohlepapierfolie (8) jeweils zwischen dem Sockel des Werkzeugs und dem Körper und/oder zwischen dem Körper und dem Kolben des Werkzeugs erfolgt.

3. Verfahren nach Anspruch 1 oder 2, bei dem vor dem Schritt a) und/oder dem Schritt d) das Anbringen einer Metallfolie (7) jeweils im Kontakt mit dem unteren Ende des oder der Stifte und/oder mit dem oberen Ende des oder der Stifte erfolgt.

4. Verfahren nach einem der vorhergehenden Ansprüche, bei dem eine Metallfolie (7) an mindestens ein Ende eines Stiftes (2) geschweißt ist, wobei die geschweißte Folie einen Teil eines Stromkollektors darstellt.

5. Verfahren nach einem der vorhergehenden Ansprüche, wobei das elektrisch isolierende gesinterte Material der Dichtung (5) ein Sinterglas ist.

6. Verfahren nach Anspruch 5, wobei das Sinterglas (5) auf Basis von Alkalioxiden ist.

7. Verfahren nach einem der vorhergehenden Ansprüche, wobei der oder die Stifte aus Aluminium ist(sind).

## Claims

1. Method for making a feedthrough comprising the following steps:
a/ positioning of a body (3) comprising a metallic wall (3) with an orifice (10) passing straight through it on a base (91) of a tooling (9), preferably one made of graphite;
b/ placing of the outer portion (92, 93) of the tooling around the body;
c/ insertion of one or more metallic pins (2) in the orifice emerging from the wall and then filling the rest of the orifice with a frit (5') of electrically insulating material;
d/ placing the upper portion of the tool forming a piston (90) against a zone including the orifice filled with the frit of electrically insulating material, preferably a glass frit, and in which the one or more pins is (are) inserted;
e/ application of a temperature and pressure cycle, and a displacement of the piston, to carry out a flash sintering process.

2. Method according to Claim 1, whereby prior to step a/ and/or step d/ a sheet of carbon paper (8) is placed respectively between the tool base and the body and/or between the body and the tooling piston.

3. Method according to Claim 1 or 2, whereby prior to step a/ and/or step d/ a metallic sheet (7) is placed respectively in contact with the lower end of the pin or pins and/or with the upper end of the pin or pins.

4. Method according to one of the preceding claims, wherein a metallic sheet (7) is welded to at least one end of a pin (2), the welded sheet forming part of a current collector.

5. Method according to one of the preceding claims, the sintered electrically insulating material of the seal (5) being a sintered glass.

6. Method according to Claim 5, the sintered glass (5) being based on alkaline oxides.

7. Method according to one of the preceding claims, the pin or pins being made of aluminium.
